# EUROPÄISCHE PATENTSCHRIFT

(11) **EP 3 809 213 B1**
(45) Veröffentlichungstag und Bekanntmachung des Hinweises auf die Patenterteilung: **20.07.2022**
(21) Anmeldenummer: 20196675.1
(22) Anmeldetag: 17.09.2020
(51) Int. Cl.: G05B 19/042

(54) **VERFAHREN ZUR PROGRAMMIERUNG VON STEUERUNGSEINRICHTUNGEN VON MASCHINEN UND MASCHINE MIT EINER STEUERUNGSEINRICHTUNG**
METHOD FOR PROGRAMMING CONTROL DEVICES OF MACHINES AND MACHINE WITH A CONTROL DEVICE
PROCÉDÉ DE PROGRAMMATION DES DISPOSITIFS DE COMMANDE DES MACHINES ET MACHINE DOTÉE D'UN DISPOSITIF DE COMMANDE

(30) Priorität: 17.10.2019 DE 102019215981
(43) Veröffentlichungstag der Anmeldung: 21.04.2021
(73) Patentinhaber: Continental Reifen Deutschland GmbH, 30165 Hannover (DE)
(72) Erfinder: Bartsch, Marvin Timo, 30419 Hannover (DE); Seutemann, Andreas, 30419 Hannover (DE); Kniesch, Marcel, 30419 Hannover (DE)
(74) Vertreter: Continental Corporation

(56) Entgegenhaltungen:
- EP-A1- 1 560 094
- WO-A1-2015/172814
- US-B2- 9 134 726

## Beschreibung

Die vorliegende Erfindung betrifft eine Steuerungseinrichtung für eine Maschine, insbesondere für eine Produktionsmaschine. Ferner betrifft sie eine Maschine mit einer Steuerungseinrichtung.

Die Lebensphasen einer Maschine, insbesondere einer Produktionsmaschine, erstrecken sich von der Konzeptionierung über die Inbetriebnahme bis zum Betrieb und zur Instandhaltung. Aus Sicht eines Maschinenherstellers sind eine möglichst schnelle Konzeptionierung und eine reibungslose Inbetriebnahme wünschenswert, um Kosten zu senken. Fortlaufende technische Weiterentwicklung macht es dabei häufig notwendig, verschiedene Maschinenoptionen, d.h. auf unterschiedlichen Technologien beruhende Varianten einer Maschine, zu verwalten.

Aus Sicht eines Anlagenbetreibers ist ein effizienter Betrieb der Maschine wünschenswert. Zudem soll eine Wartung der Maschine möglichst einfach und kosteneffizient möglich sein. Die Erneuerung von Teilen der Maschine soll zudem mit geringem Aufwand möglich sein.

Aus der WO 2015/172814 A1 ist die Verwendung serviceorientierter Programmierverfahren bekannt, die den Rückgriff auf bestehende Bibliotheken mit Stammobjekten erlauben, wobei jedes Stammobjekt eine vordefinierte Automatisierungsaufgabe bereitstellt.

Der Grad der Automatisierung von Produktionsmaschinen steigt stetig. Bereits heute sind eine Vielzahl von Automatisierungskomponenten untereinander vernetzt. Dadurch steigt insbesondere die Komplexität der Steuerungssoftware stetig. Neben den komplexen Betriebsabläufen der Maschine muss auch die Diagnose (Alarme, Fehler etc.) programmiert werden. Zudem wird immer mehr Wert auf prädiktive Vorhersagen von Ausfällen gelegt.

Es besteht daher die Aufgabe der vorliegenden Erfindung darin, eine Steuerungseinrichtung für eine Maschine anzugeben, mit der die Maschine besonders einfach konzeptioniert, in Betrieb genommen und gewartet werden kann. Zudem soll es ermöglichen werden, neue Technologien zu berücksichtigen und Maschinenteile mit möglichst geringem softwareseitigem Aufwand auszutauschen. Ferner soll eine Maschine mit einer Steuerungseinrichtung angegeben werden, die besonders einfach konzeptionierbar, in Betrieb nehmbar und wartbar ist.

Diese Aufgabe wird gelöst mit dem Gegenstand des Anspruchs 1 Weitere Ausführungsformen und vorteilhafte Ausgestaltungen sind Gegenstand der Unteransprüche.

Erfindungsgemäß wird eine Steuerungseinrichtung für eine Maschine angegeben, wobei die Maschine eine Anzahl von Anlagenmodulen mit Aktoren und Sensoren aufweist, wobei mittels der Aktoren definierte Bewegungsabläufe von Maschinenteilen innerhalb des Anlagenmoduls ausführbar sind, wobei die Steuerungseinrichtung programmiert ist, um einen definierten Ablauf auszuführen, wobei in einer Programmstruktur der Steuerungseinrichtung die Maschine in Einzelsteuereinheiten eingeteilt ist. Eine Mehrzahl von Steuereinheitsebenen ist definiert, wobei eine untere Steuereinheitsebene Basis-Einzelsteuereinheiten umfasst, die direkte Schnittstellen zur Sensorik und Aktorik bilden und in denen die einfachsten möglichen Bewegungsabläufe von Maschinenteilen abgebildet werden. Höhere Steuereinheitsebenen umfassen Kombinationen aus Basis-Einzelsteuereinheiten und/oder Einzelsteuereinheiten, so dass komplexere Bewegungsabläufe durch übergeordnete Einzelsteuereinheiten abgebildet werden können, die mehrere Basis-Einzelsteuereinheiten miteinander kombinieren, wobei die von einer Einzelsteuereinheit ausführbaren Bewegungsabläufe in Dienste eingeteilt sind, wobei Befehle zur Ansteuerung der Aktoren von Basis-Einzelsteuereinheiten zur Ausführung des jeweiligen Bewegungsablaufs innerhalb der Dienste gekapselt sind und wobei Dienste zur Ansteuerung von Anlagenteilen durch übergeordnete Einzelsteuereinheiten ohne Bezug auf die unterlagerten Technologien definiert sind.

Die Steuerungseinrichtung weist den Vorteil auf, dass sie eine technologieneutrale Betrachtung der Steuerungsprogrammierung erlaubt, bei der die prozesstechnische Umsetzung getrennt von der Ansteuerung der physikalischen Komponenten der Maschine ermöglicht wird. Konkret wird durch die Kapselung der Befehle in Dienste eine Entkopplung der hardwaretechnischen Umsetzung von der softwaretechnischen Umsetzung erreicht.

Die Steuerungseinrichtung kann darüber hinaus verteilt aufgebaut werden, wobei die Steuerungseinrichtung als Netzwerk mehrerer Rechnersysteme ausgebildet ist, da die bereitgestellten Dienste auch über Steuerungsgrenzen hinweg aufgerufen werden können. Das hat den Vorteil, dass die hohe Flexibilität eines Netzwerks von mehreren Steuerungseinrichtungen genutzt werden kann.

Die Steuerungseinrichtung ermöglicht es somit, verschiedene Technologieoptionen softwareseitig auf dieselbe Weise zu behandeln. Beispielsweise können Maschinen, die sowohl in Versionen mit elektrischen Antrieben als auch in Versionen mit pneumatischen Antrieben genutzt werden, auf dieselbe Weise angesteuert werden. Der Aufruf der Dienste aus der Prozesskoordinierung hat für beide Versionen den gleichen Effekt.

Gemäß einer Ausführungsform wird eine Mehrzahl von Steuereinheitsebenen definiert, wobei eine untere Steuereinheitsebene Basis-Einzelsteuereinheiten umfasst, die direkte Schnittstellen zur Sensorik und Aktorik einer Einzelsteuereinheit bilden, und wobei höhere Steuereinheitsebenen Kombinationen aus Basis-Einzelsteuereinheiten und/oder unterlagerten Einzelsteuereinheiten umfassen.

Bei dieser Ausführungsform greift die Prozesssteuerung zur Koordinierung von Maschinenbewegungen auf obere Steuereinheitsebenen zu. Auf diesen Ebenen werden die spezifischen Funktionen bzw. Bewegungsabläufe der betreffenden Einzelsteuereinheit über eine definierte Schnittstelle bereitgestellt. Diese Funktionen, die auch als Dienste bezeichnet werden, können dabei vorteilhafter Weise ohne Bezug auf die unterlagerten Technologien definiert werden. Durch die Kapselung von bereitgestellten Befehlen der Basis-Einzelsteuereinheiten innerhalb der Dienste und durch die Definition mehrerer Steuereinheitsebenen ist somit eine technologieunabhängige Steuerung möglich. Während Basis-Einzelsteuereinheiten Befehle bereitstellen und untere Steuereinheitsebenen Dienste zur Ansteuerung einzelner Aktoren anbieten, können höhere Steuereinheitsebenen Dienste zur Ansteuerung von Anlagenteilen zur Verfügung stellen, und zwar unabhängig von der unterlagerten Technologie, da übergeordnete Systeme ausschließlich mit abstrahierten Funktionen arbeiten.

Gemäß einer Ausführungsform wird dazu ferner eine Prozesssteuerung bereitgestellt, die zur Koordinierung komplexer Abläufe einer Maschine auf obere Steuereinheitsebenen zugreift.

Erfindungsgemäß umfasst die Steuerungseinrichtung ferner Dienstverwalter, wobei die Dienstverwalter im Betrieb Daten über den Verlauf des Aufrufs des jeweiligen Dienstes sammeln.

Derartige Daten können beispielsweise die Ausführungszeit eines Dienstes oder der erfolgreiche Abschluss sein. Insbesondere umfassen die Dienstverwalter eine Zustandsmaschine, in der zumindest die Zustände Inaktiv, Operation und Fertig definiert sind. Die Weiterschaltung zwischen den Zuständen erfolgt dabei implizit durch den Dienstverwalter durch Auswertung einer im Dienstverwalter integrierten und im Dienst aufgerufenen Zustands-Melde-Funktion.

Dies hat den Vorteil, dass über die Dienstverwalter überprüft werden kann, welche Dienste gerade angefragt sind und in welchem Zustand sie sich befinden, um so weitere Diagnoseinformationen zum Maschinenzustand automatisch zu generieren. Die auf diese Weise gesammelten Daten können somit in vielfältiger Weise genutzt werden, um die Maschine zu überwachen und sogar prädiktive Aussagen zu treffen.

Erfindungsgemäß werden als Eingangsparameter eines Dienstes zumindest ein Parameter zur Freigabe des Dienstes und gegebenenfalls zusätzlich prozessrelevante Parameter übergeben, wobei als Ausgangsparameter eines Dienstes Informationen über die Zustände des Dienstes übergeben werden.

Beispielsweise kann der Dienst über die ausgegebenen Ausgangsparameter rückmelden, in welchem internen Zustand er sich befindet.

Die Ausgangsparameter eines Dienstes werden vorteilhafterweise innerhalb der Prozesskoordinierung auf standardisierte Weise verwendet. Insbesondere werden sie auf standardisierte Weise verwendet, um nachfolgende Dienste zu starten. Das beinhaltet, dass die Prozesskoordinierung einen Dienst abhängig davon startet, ob der vorangegangene Dienst zurückgemeldet hat, dass sein Zustand "fertig" ist. Es wird demnach beispielsweise nicht durch die Prozesskoordinierung separat überprüft, ob z.B. eine bestimmte Position angefahren wurde, wenn der entsprechende Dienst "fertig" meldet. Diese Kapselung hat den Vorteil eines besonders einfachen und flexiblen modularen Aufbaus.

Gemäß einer Ausführungsform werden die von dem Dienstverwalter gesammelten Daten über einen definierten Zeitraum ausgewertet, um über eine Anomalieerkennung Probleme beim Betrieb der Maschinen zu erkennen. Der definierte Zeitraum kann beispielsweise ein Produktionszyklus oder eine Mehrzahl von Produktionszyklen sein.

Die gesammelten Daten können beispielsweise mit einer Referenz verglichen werden, um den Zustand der Maschine zu überwachen. Die Anomalieerkennung kann dabei insbesondere auch unter Einbeziehung der vorhandenen Echtzeit-Überwachungseinrichtungen (zum Beispiel Prozessdaten) einer Maschine erweitert werden.

Die von den Dienstverwaltern gesammelten und ausgewerteten Daten können visualisiert werden, um einem Betreiber der Maschine in Echtzeit eine Rückmeldung über den Zustand des Systems zu geben.

Gemäß einem Aspekt der Erfindung wird eine Maschine mit der beschriebenen Steuerungseinrichtung angegeben. Bei der Maschine handelt es sich insbesondere um eine Produktionsmaschine.

Gemäß einer Ausführungsform ist die Steuerungseinrichtung als Netzwerk mehrerer Rechnersysteme ausgebildet. Alternativ kann sie auch als einzelnes Rechnersystem ausgebildet sein.

Ausführungsformen der Erfindung werden im Folgenden anhand von schematischen Figuren näher erläutert.
- Figur 1: zeigt wesentliche Komponenten einer Steuerungseinrichtung einer Maschine gemäß einer Ausführungsform der Erfindung;
- Figur 2: zeigt die Zuordnung von Komponenten der Steuerungseinrichtung gemäß Figur 1 während der Programmierung;
- Figur 3: zeigt Dienste und Einzelsteuereinheiten als Elemente der Steuerungseinrichtung gemäß Figur 1;
- Figur 4: zeigt Einzelsteuereinheiten mit Dienstverwaltern gemäß einer Ausführungsform der Erfindung;
- Figur 5: zeigt in den Diensten übergebene Ein- und Ausgangsparameter;
- Figur 6: illustriert die Sammlung und Auswertung von Daten, die durch die Dienstverwalter geliefert werden;
- Figur 7: illustriert die Zuordnung von Diensten zu Aktoren einer Maschine;
- Figur 8: zeigt, wie das Verfahren gemäß einer Ausführungsform der Erfindung für eine Fehleranalyse genutzt werden kann und
- Figur 9: zeigt den Ablauf eines Verfahrens zur Fehleranalyse der Maschine.

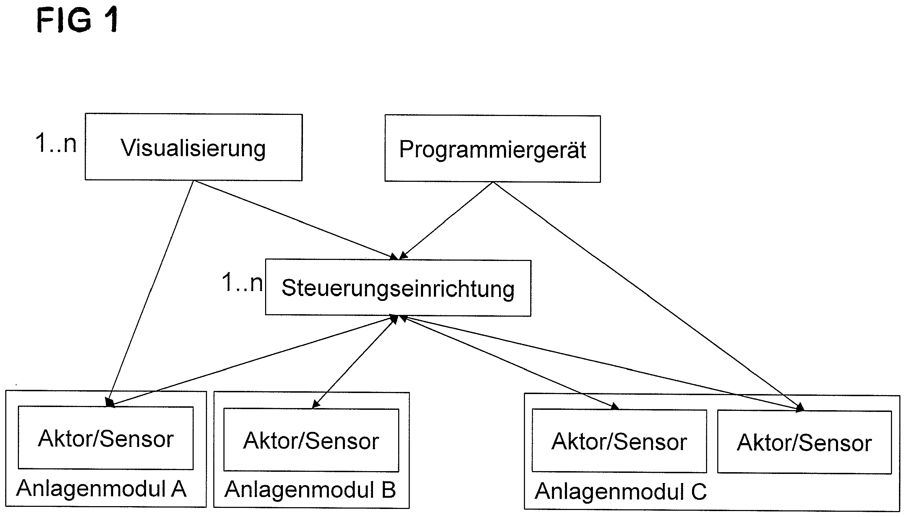

Figur 1 zeigt ein System aus zumindest einer Steuerungseinrichtung (Controller) und verschiedenen Anlagenmodulen A, B, C einer Maschine, die jeweils über Aktoren und Sensoren verfügen. Mittels der Aktoren werden definierte Bewegungsabläufe von Maschinenteilen innerhalb des Anlagenmoduls ausgeführt. Die Rückmeldung der Sensorik wird genutzt, um die Aktoren zu steuern bzw. zu regeln.

Bei den dargestellten Anlagenmodulen A, B, C handelt es sich um Module einer Produktionsmaschine. Beispielsweise kann es sich um eine Maschine zum Reifenbau handeln. Insbesondere kann es sich auch um mehrere in einem Produktionsablauf verbundene Maschinen handeln, die voneinander getrennte Produktionsschritte durchführen. Der Produktionsprozess ist dabei weitgehend automatisiert, er muss jedoch nicht vollständig automatisiert sein.

Die für die Ansteuerung der Aktoren und Sensoren benötigte Logik befindet sich auf zumindest einer Steuerungseinrichtung.

Das System umfasst ferner eine Möglichkeit zur Visualisierung des Produktionsprozesses während der Laufzeit der Produktionsmaschine. Mittels der Visualisierung werden beispielsweise Fehlermeldungen oder Alarme dargestellt.

Für die Programmierung der Steuerungseinrichtungen wird ein Programmiergerät genutzt. Das Programmierverfahren ist dabei nicht an ein spezielles Programmiersystem oder eine spezielle Hardwarearchitektur gebunden. Das Verfahren kann innerhalb eines Einzelrechnersystems oder eines Netzwerks genutzt werden, sodass einzelne Komponenten über mehrere Einzelrechnersysteme verteilt werden. Es kann dann ein geeignetes Kommunikationsmedium (beispielsweise OPC UA) genutzt werden, um den Datenaustausch zwischen verschiedenen Plattformen zu ermöglichen.

Die Steuerungseinrichtung kann zum Beispiel mit einem SPS System (speicherprogrammierbare Steuerung) nach IEC61131 komplett oder auch in Teilen umgesetzt werden.

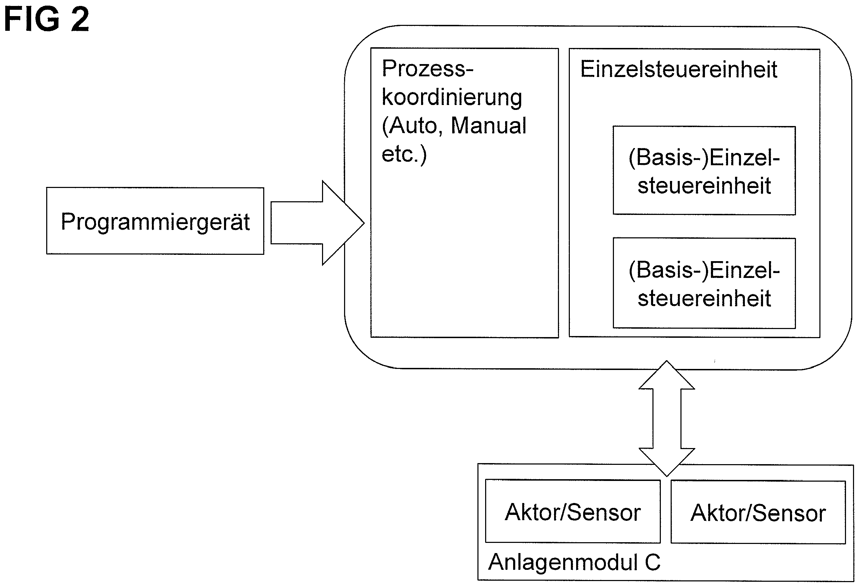

Figur 2 zeigt der Programmierung zu Grunde liegende Zuordnung zwischen Einzelsteuereinheiten und Aktoren bzw. Sensoren. Die Programmstruktur ist dabei gemäß ISA 88 aufgebaut. Insbesondere werden Basis-Einzelsteuereinheiten als Schnittstelle zu Aktoren bzw. Sensoren der Einzelsteuereinheiten verwendet. Dabei erfolgt die Einteilung der Maschinen in Einzelsteuereinheiten derart, dass die einfachsten möglichen Maschinenbewegungen, beispielsweise durch Betätigung eines einzelnen Aktors, in einer Basis-Einzelsteuereinheit abgebildet werden. Komplexere Bewegungsabläufe können durch übergeordnete Einzelsteuereinheiten abgebildet werden, die mehrere Basis-Einzelsteuereinheiten miteinander kombinieren.

Es werden somit mehrere Steuereinheitsebenen definiert, wobei die untere Ebene die Basis-Einzelsteuereinheiten enthält, die auf höheren Ebenen zur Ansteuerung von Anlagenteilen kombiniert werden.

Zudem wird, wie in Figur 2 dargestellt, zur Ablaufsteuerung eine Prozesskoordinierung verwendet. Die Prozesskoordinierung implementiert Abläufe der Maschine, beispielsweise gemäß einem definierten Rezept, und kann dabei innerhalb der Steuerungseinrichtung, beispielsweise durch sequential function charts (SFC), oder in einer übergeordneten Prozesssteuerung bestehen.

Die Prozesssteuerung greift zur Koordinierung des Maschinenablaufs auf obere Steuereinheitsebenen zu. Auf diesen Steuereinheitsebenen werden die modulspezifischen Funktionen und Bewegungsabläufe, beispielsweise das Ansteuern einer definierten Position, über eine definierte Schnittstelle bereitgestellt.

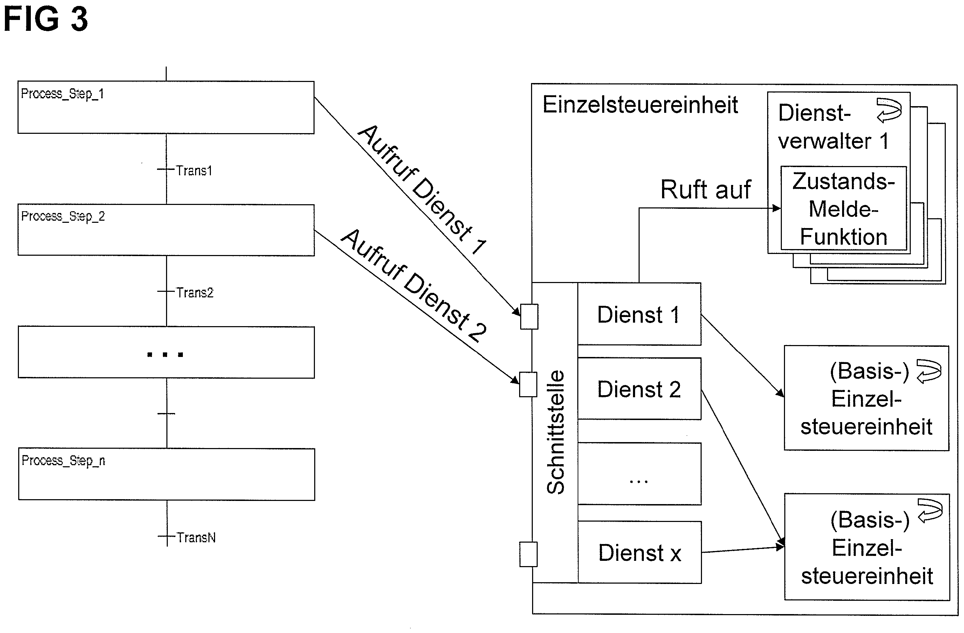

Dies ist in Figur 3 gezeigt. Die modulspezifischen Funktionen werden hier als Dienste bezeichnet und sind ohne Bezug auf die unterlagerten Technologien definiert.

Als Beispiel für eine Produktionsmaschine könnte eine Bautrommel einer Reifenbaumaschine in verschiedenen Varianten genutzt werden, wobei manche Varianten eine Expansion der Trommel elektromotorisch durchführen, andere jedoch pneumatisch. Die Beschreibung der Schnittstelle kann jedoch auf die Grundfunktionen (expandieren, kollabieren, drehen) reduziert werden. Der Aufruf des Dienstes aus der Prozesskoordinierung hat für beide Varianten den gleichen Effekt. Falls rezeptabhängige Parameter berücksichtigt werden sollen, können diese direkt an die spezifischen Einzelsteuereinheiten geroutet werden, sodass eine besonders gute Austauschbarkeit der Module gewährleistet ist. Die Einzelsteuereinheiten enthalten zumindest einen Dienst.

Jedem Dienst wird, wie in Figur 3 gezeigt ist, innerhalb der korrespondierenden Einzelsteuereinheit eine organisierende Funktion zugeordnet, die als Dienstverwalter bezeichnet wird und die den Zustand des Dienstes erfasst. Während der Dienst nur bei Bedarf über die Schnittstelle aufgerufen wird, wird der Dienstverwalter dauerhaft abgearbeitet. Somit hat der Dienstverwalter über die von ihm zur Verfügung gestellte und im Dienst aufgerufene Zustands-Melde-Funktion die Möglichkeit den Zustand des Dienstes zu überwachen.

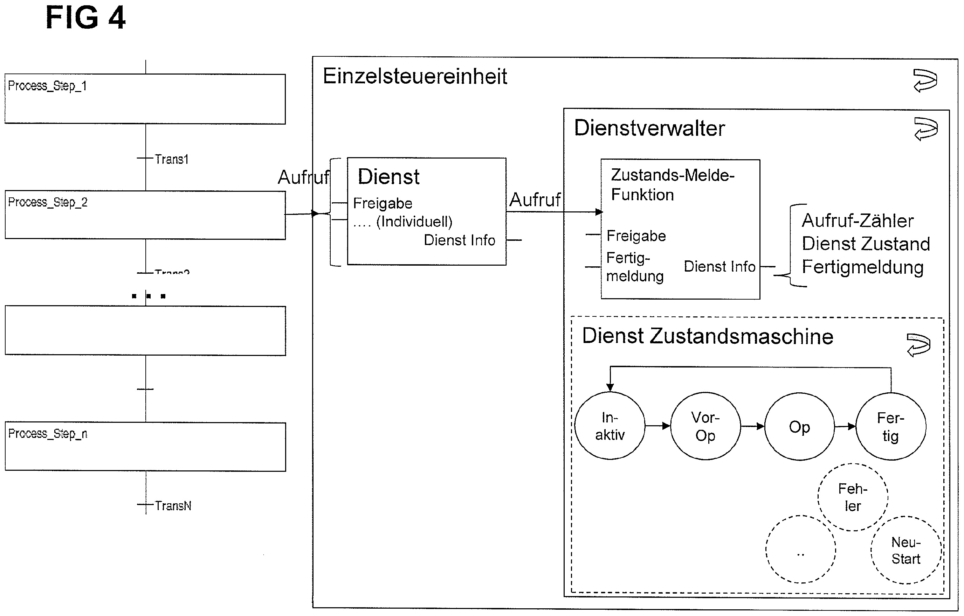

Dies ist auch in Figur 4 gezeigt. Der Dienstverwalter weist eine Zustandsmaschine auf, in Figur 4 als Dienstzustand bezeichnet, die eine Auswahl an Zuständen definiert. In der gezeigten Ausführungsform sind dies zumindest die Zustände Inaktiv, Vor-Operation, Operation und Fertig. Weitere mögliche Zustände sind beispielsweise Fehler und Neustart.

Innerhalb eines Dienstes wird auf die innerhalb der Einzelsteuereinheit vorhandenen Aktoren und Sensoren zugegriffen, um Maschinenabläufe zu steuern. Hierfür werden innerhalb der Einzelsteuereinheit typischerweise weitere Einzelsteuereinheiten oder Basis-Einzelsteuereinheiten geschachtelt. Während die Ansteuerung der Einzelsteuereinheiten über bereitgestellte Dienste erfolgt, kann die Ansteuerung der untergeordneten Basis-Einzelsteuereinheiten über einfache Signale erfolgen. Für komplexe Basis-Einzelsteuereinheiten, beispielsweise zur Ansteuerung von Antrieben, müssen jedoch unter Umständen je nach Bewegungsbefehl eine Vielzahl von Daten bidirektional ausgetauscht werden. Um dies zu vereinfachen, kann eine weitere Kapselung in Form von Befehlen durchgeführt werden. Die Befehle dienen dabei als Kommunikationsmedium zu den untergeordneten Basis-Einzelsteuereinheiten und senden Daten bezüglich der angestrebten Funktion und erhalten Rückmeldung über den Zustand (beispielsweise Status der angeforderten Bewegung, Unterbrechungen sowie Gründe dafür).

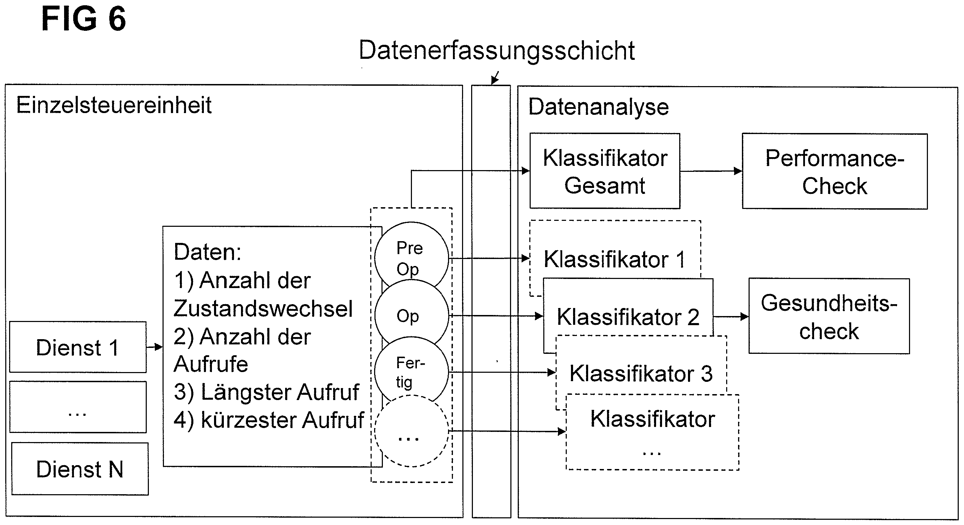

Die Ansteuerung führt damit zu einer übersichtlichen Verwendung von Einzelsteuereinheiten und bringt Vorteile für eine systematische Datenanalyse, wie anhand der Figuren 6 bis 9 beschrieben wird.

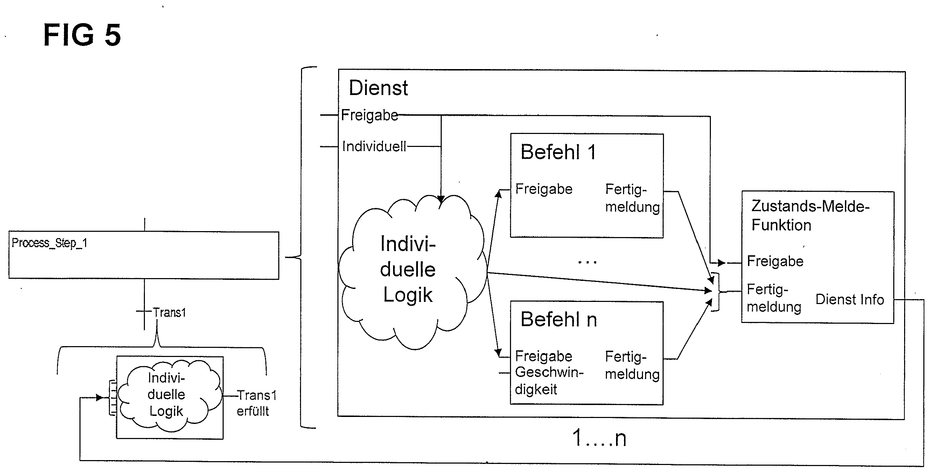

Wie in Figur 5 dargestellt ist, verfügt ein Dienst über Eingangs- und Ausgangsparameter. Dabei wird zumindest ein Eingangsparameter zur Freigabe des Dienstes übergeben. Zudem können auch weitere Prozessrelevante Eingangsparameter vorgegeben werden, beispielsweise spezifische Positionen. Neben den Befehlen wird innerhalb eines Dienstes eine vom zugeordneten Dienstverwalter zur Verfügung gestellte Zustands-Melde-Funktion aufgerufen, die den Dienstverwalter über den derzeitigen Aufruf des Dienstes informiert (Zustands-Melde-Funktion) und so Änderungen in der Zustandsmaschine hervorruft, beispielsweise eine Zustandsänderung von Inaktiv zu Vor-Operation, wenn ein Dienst aufgerufen wurde, die Freigabe (Eingangsparameter des Dienstes) aber noch nicht erteilt ist.

Als Ausgangsparameter eines Dienstes werden Informationen über die Zustände des korrespondierenden Dienstes in einer allgemeingültigen Form übergeben. Beispielsweise könnte diese Rückmeldung Informationen über den internen Zustand des Dienstes enthalten.

Die Freigabe der Dienste bzw. individuelle Eingangsparameter können innerhalb der Prozesskoordinierung genutzt werden, um das Verhalten der Maschine im Rahmen der individuellen Logik ablaufspezifisch zu beeinflussen. Die übergebenen Ausgangsparameter können zur Weiterschaltung des Prozesses genutzt werden.

Durch das gezeigte Verfahren wird eine Entkoppelung zwischen der prozesstechnischen Ansteuerung und der hardwaretechnischen Umsetzung ermöglicht.

Vorteilhafter Weise erlaubt das Verfahren auf besonders einfache Weise eine Datenauswertung, die zur Überwachung des Produktionsprozesses und gegebenenfalls zur prädiktiven Wartung der Produktionsmaschine genutzt werden kann. Diese Datenauswertung wird im Folgenden anhand der Figuren 6 bis 9 näher beschrieben.

Bei der Datenauswertung spielen insbesondere die durch die Zustandsmaschine gewonnenen Daten über den Zustand der Dienste eine Rolle. Beispielsweise können für einen zu beobachtenden Zyklus bestimmte Verhaltensdaten eines Dienstes erfasst werden, insbesondere die Anzahl der Zyklen in einem Zustand während der zu beobachtenden Phase, die Zeit oder eine damit verbundene Messgröße, die während der Phase in dem Zustand verweilt wird, die längste und die kürzeste Zeit oder eine damit verbundene Messgröße, die in dem jeweiligen Zustand verweilt wurde.

Die erfassten Daten können über ein geeignetes Kommunikationsmittel (beispielsweise ADS, OPC UA) ausgelesen werden. Durch die im Verfahren der Programmierung angewendete Semantik lässt sich der Aufbau der Kommunikationsschicht automatisieren. Für ein externes Gerät, beispielsweise eine Visualisierung, ist es möglich, die innerhalb von Einzelsteuereinheiten implementierten Dienste zu identifizieren. Hierzu können Kommunikationsmechanismen genutzt werden, die die implementierten Dienste auffinden. Die aufgefundenen Dienste können dann durch einen geeigneten Kommunikationsmechanismus ausgelesen werden. Hierfür kann beispielsweise durch die Steuerungseinrichtung ein Ringpuffer bereitgestellt werden oder durch einen Client eine ereignisgesteuerte Kommunikationsbeziehung aufgebaut werden.

Die durch die Zustandsmaschine erfassten Daten lassen sich bereits zur Auswertung nutzen. So kann eine im Betrieb befindliche oder gerade in Betrieb genommene Maschine mit einem Referenzrezept gefahren werden. Die so aufgenommenen Daten lassen sich in Echtzeit mit einem vorgegebenen Referenzdatensatz vergleichen, wobei Algorithmen zur Anomalieerkennung genutzt werden können (beispielsweise Isolation Forrest, Local Outlier Factor). Für jeden Dienst kann ein Anomaliescore ermittelt werden, der die Zustandsdaten der einzelnen Zustände auswertet. Aus dem ermittelten Anomaliescore und einem geeigneten Schwellwert können von der Norm abweichende Dienste identifiziert werden. Hierdurch wird ein Zustandscheck der Anlage ermöglicht, der dem Betreiber nach erfolgter Inbetriebnahme Sicherheit über die korrekte Einstellung der Maschine oder im späteren Verlauf Hinweise auf Fehler bzw. Probleme geben kann.

Figur 6 zeigt die Verwendung der auf der unteren Steuereinheitsebene zur Verfügung gestellten Zustandsdaten über eine Datenakquisitionsschicht in einer Datenanalyse, die die beschriebene Auswertung durchführt.

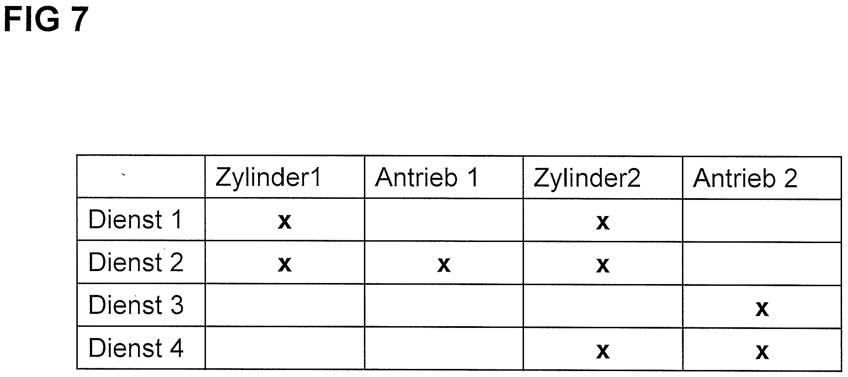

Figur 7 zeigt beispielhaft die Verknüpfung einzelner Dienste mit konkreten Aktoren/Sensoren. In den gezeigten Beispielen greift der Dienst 1 auf die Zylinder 1 und 2 zu, der Dienst 2 auf die Zylinder 1 und 2 sowie auf den Antrieb 1, der Dienst 3 auf den Antrieb 2 und der Dienst 4 auf den Zylinder 2 und den Antrieb 2. Ergibt nun die Datenanalyse Anomalien bei den Diensten 3 und 4, so ist mit hoher Wahrscheinlichkeit ein Problem mit dem Antrieb 2 die Ursache. Auf diese Weise können durch Betrachtung der einzelnen Anomaliescores Rückschlüsse auf konkrete Aktoren oder Sensoren der Maschine erfolgen. Der so entstandene Datensatz enthält implizites Prozesswissen, ohne dass besondere Konfigurationen erfolgen muss.

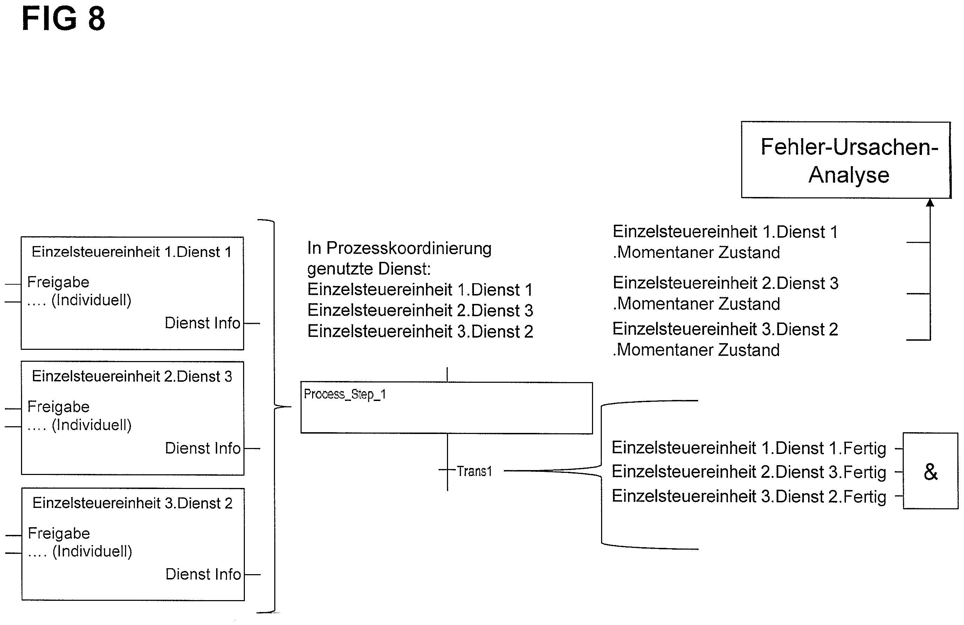

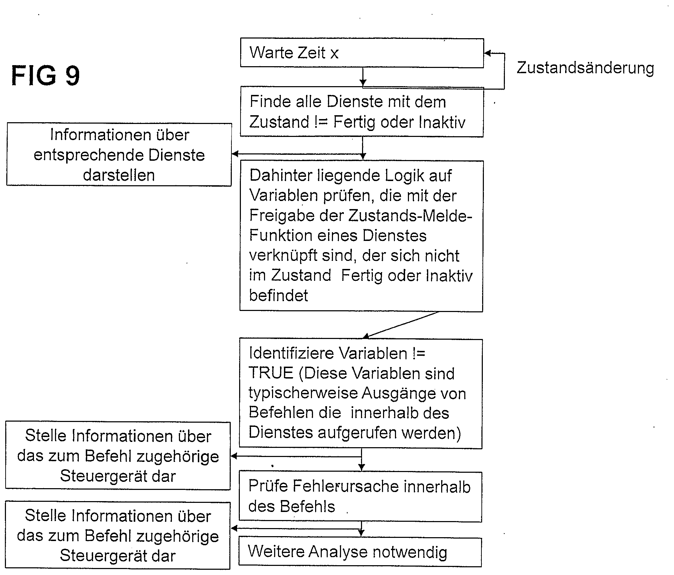

Wie in Abbildung 8 illustriert, bietet das beschriebene Verfahren auch eine Möglichkeit zur Fehler-Ursachen-Analyse. Dabei führt die Prozesskoordinierung mehrere Schritte aus, in denen sie auf Dienste der einzelnen Einzelsteuereinrichtungen zugreift. Jeder aufgerufene Dienst liefert als Ausgangsparameter ein Set an Zustandsdaten des jeweiligen Dienstes. Wenn diese Daten den intern mitgeloggten Zustand enthalten, kann mit dem Verfahren, wie in Abbildung 9 gezeigt, die Ursache bestimmt werden.

Abbildung 9 zeigt dazu beispielhaft ein Ablaufdiagramm. Der Vorteil dieses Vorgehens ist, dass bereits ohne Wissensbasis Aussagen über eine Fehlerursache getroffen werden können.

## Patentansprüche

1. Steuerungseinrichtung für eine Maschine, wobei die Maschine eine Anzahl von Anlagenmodulen mit Aktoren und Sensoren aufweist, wobei mittels der Aktoren definierte Bewegungsabläufe von Maschinenteilen innerhalb des Anlagenmoduls ausführbar sind, wobei die Steuerungseinrichtung programmiert ist, um einen definierten Ablauf auszuführen, wobei in einer Programmstruktur der Steuerungseinrichtung die Maschine in Einzelsteuereinheiten eingeteilt ist und wobei der Programmierung eine Zuordnung zwischen Einzelsteuereinheiten und Aktoren bzw. Sensoren zugrunde liegt,
**dadurch gekennzeichnet, dass**
eine Mehrzahl von Steuereinheitsebenen definiert ist, wobei eine untere Steuereinheitsebene Basis-Einzelsteuereinheiten umfasst, die direkte Schnittstellen zur Sensorik und Aktorik bilden und in denen die einfachsten möglichen Bewegungsabläufe von Maschinenteilen abgebildet werden, und wobei höhere Steuereinheitsebenen Kombinationen aus Basis-Einzelsteuereinheiten umfassen, so dass komplexere Bewegungsabläufe durch übergeordnete Einzelsteuereinheiten abgebildet werden können, die mehrere Basis-Einzelsteuereinheiten miteinander kombinieren,
wobei die von einer Einzelsteuereinheit ausführbaren Bewegungsabläufe in Dienste eingeteilt sind,
wobei Befehle zur Ansteuerung der Aktoren von Basis-Einzelsteuereinheiten zur Ausführung des jeweiligen Bewegungsablaufs innerhalb der Dienste gekapselt sind und
wobei Dienste zur Ansteuerung von Anlagenteilen durch übergeordnete Einzelsteuereinheiten ohne Bezug auf die unterlagerten Technologien definiert sind;
wobei die Steuerungseinrichtung ferner Dienstverwalter umfasst, wobei die Dienstverwalter im Betrieb Daten über einen Verlauf des Aufrufs des jeweiligen Dienstes sammeln
und wobei die Dienstverwalter eine Zustandsmaschine umfassen, in der zumindest die Zustände Inaktiv, Operation und Fertig einer Einzelsteuereinheit definiert sind, wobei eine Weiterschaltung zwischen Zuständen implizit durch den Dienstverwalter durch Auswertung einer im Dienstverwalter integrierten und im Dienst aufgerufenen Zustands-Melde-Funktion erfolgt,
wobei als Eingangsparameter eines Dienstes zumindest ein Parameter zur Freigabe des Dienstes und gegebenenfalls zusätzlich prozessrelevante Parameter übergeben werden und wobei als Ausgangsparameter eines Dienstes Informationen über die Zustände des Dienstes übergeben werden.

2. Steuerungseinrichtung nach Anspruch 1,
wobei die Ausgangsparameter eines Dienstes innerhalb einer Prozesskoordinierung auf standardisierte Weise verwendet werden.

3. Steuerungseinrichtung nach einem der Ansprüche 1 oder 2,
wobei die Steuerungseinrichtung dazu eingerichtet ist, von den Dienstverwaltern gesammelte Daten über einen definierten Zeitraum auszuwerten um über eine Anomalieerkennung Probleme beim Betrieb der Maschinen zu erkennen.

4. Steuerungseinrichtung nach Anspruch 3,
wobei die Steuerungseinrichtung dazu eingerichtet ist, von den Dienstverwaltern gesammelte und ausgewertete Daten zu visualisieren.

5. Maschine mit einer Steuerungseinrichtung nach einem der Ansprüche 1 bis 4.

## Claims

1. Control device for a machine, wherein the machine comprises a number of installation modules having actuators and sensors, wherein the actuators can be used to perform defined motion sequences for machine parts within the installation module, wherein the control device is programmed to perform a defined sequence, wherein the machine is divided into single control units in a program structure of the control device and wherein the programming is based on an association between single control units and actuators or sensors,
**characterized in that**
a plurality of control unit levels are defined, wherein a lower control unit level comprises basic single control units that form direct interfaces to the sensor system and actuator system and in which the simplest possible motion sequences for machine parts are reproduced, and wherein higher control unit levels comprise combinations of basic single control units, with the result that more complex motion sequences can be reproduced by superordinate single control units that combine multiple basic single control units with one another,
wherein the motion sequences that can be performed by a single control unit are divided into services,
wherein commands for actuating the actuators of basic single control units to perform the respective motion sequence are encapsulated within the services, and wherein services for actuating installation parts are defined by superordinate single control units without reference to the lower-level technologies;
wherein the control device further comprises service managers, the service managers collecting data about a progression of the call to the respective service during operation,
and wherein the service managers comprise a state machine in which at least the states Inactive, Operating and Finished relating to a single control unit are defined, wherein handover between states is effected implicitly by the service manager by evaluating a state reporting function that is integrated in the service manager and called in the service,
wherein the input parameters transferred for a service are at least one parameter for enabling the service and possibly additionally process-relevant parameters and wherein the output parameters transferred for a service are information about the states of the service.

2. Control device according to Claim 1,
wherein the output parameters for a service are used within a process coordination in a standardized manner.

3. Control device according to either of Claims 1 and 2,
wherein the control device is configured to evaluate data collected by the service managers over a defined period in order to identify problems in the operation of the machines by way of anomaly detection.

4. Control device according to Claim 3,
wherein the control device is configured to visualize data collected and evaluated by the service managers.

5. Machine having a control device according to one of Claims 1 to 4.

## Revendications

1. Dispositif de commande destiné à une machine, la machine comportant un certain nombre de modules de système comprenant des actionneurs et des capteurs, des séquences de mouvement définies au moyen des actionneurs pouvant être exécutées par des parties de machine dans le module de système, le dispositif de commande étant programmé pour exécuter une séquence définie, dans une structure de programme du dispositif de commande la machine étant divisée en unités de commande individuelles et la programmation étant basée sur une association entre des unités de commande individuelles et des actionneurs ou des capteurs,
**caractérisé en ce que**
une pluralité de niveaux d'unités de commande est définie, un niveau d'unité de commande inférieur comprenant des unités de commande individuelles de base qui forment des interfaces directes avec l'ensemble de capteurs et l'ensemble d'actionneurs et dans lesquelles les séquences de mouvement possibles les plus simples sont reproduites par des parties de machine, et des niveaux d'unités de commande supérieurs comprenant des combinaisons d'unités de commande individuelles de base de sorte que des séquences de mouvement plus complexes puissent être reproduites par des unités de commande individuelles de niveau supérieur qui combinent une pluralité d'unités de commande individuelles de base entre elles,
les séquences de mouvement exécutables par une unité de commande individuelle étant divisées en services,
des instructions d'activation des actionneurs étant encapsulées dans les services par des unités de commande individuelles de base afin d'exécuter la séquence de mouvement respective et
des services d'activation des parties de système étant définis par des unités de commande individuelles de niveau supérieur sans référence aux technologies subordonnées ;
le dispositif de commande comprenant en outre des gestionnaires de service, les gestionnaires de service collectant des données sur une évolution de l'appel du service respectif pendant le fonctionnement,
et le gestionnaire de services comprenant une machine d'état dans laquelle au moins les états Inactif, Opération et Prêt d'une unité de commande individuelle sont définis, une commutation ultérieure entre des états étant effectuée implicitement par le gestionnaire de services par évaluation d'une fonction de rapport d'état intégrée dans le gestionnaire de services et appelée dans le service, au moins un paramètre d'autorisation du service et éventuellement d'autres paramètres pertinents pour le processus étant transmis comme paramètres d'entrée d'un service, et des informations sur les états du service étant transmises comme paramètres de sortie d'un service.

2. Dispositif de commande selon la revendication 1,
les paramètres de sortie d'un service étant utilisés dans une coordination de processus d'une manière normalisée.

3. Dispositif de commande selon l'une des revendications 1 et 2,
le dispositif de commande étant conçu pour évaluer des données collectées par les gestionnaires de services sur un intervalle de temps défini afin d'identifier des problèmes dans le fonctionnement des machines par le biais d'une détection d'anomalies.

4. Dispositif de commande selon la revendication 3,
le dispositif de commande étant conçu pour visualiser des données collectées et évaluées par les gestionnaires de services.

5. Machine comprenant un dispositif de commande selon l'une des revendications 1 à 4.
